# EUROPEAN PATENT APPLICATION

(11) **EP 2 589 778 A2**
(43) Date of publication of application: **08.05.2013**
(21) Application number: 12191637.3
(22) Date of filing: 07.11.2012
(51) Int. Cl.: F02C 7/18

(54) **System for operating a power plant**

(30) Priority: 07.11.2011 US 201113290832
(71) Applicant: General Electric Company, Schenectady, New York 12345 (US)
(72) Inventor: Beard, Jason Edward, Greenville, SC South Carolina 29615 (US); Rosson, Randy Scott, Greenville, SC South Carolina 29615 (US)
(74) Representative: Cleary, Fidelma

(57) **Abstract**

A system for operating a power plant is provided and includes a grid configured to generate a normal load and an abnormal load, a turbomachine (10) configured to provide power to the grid in accordance with the normal load by firing at normal temperatures and in accordance with the abnormal load by firing at higher-than-normal temperatures, a cooling system (50) disposed to cool components of the turbomachine with fluid supplied by an external reservoir (53) and a controller configured to identify when the grid generates the abnormal load and to responsively operate the cooling system.

## Description

### BACKGROUND OF THE INVENTION

The subject matter disclosed herein relates to a system for operating a power plant.

Typically, a turbomachine includes a compressor, a combustor and a turbine. The compressor compresses inlet gas to produce compressed gas. The combustor is fluidly coupled to the compressor and thereby receptive of the compressed gas. The combustor is formed to define a first interior in which the compressed gas is mixed with fuel to form a mixture and a second interior in which the mixture is combusted. This combustion produces a fluid flow of, for example, high temperature fluids. The turbine is fluidly coupled to an outlet of the combustor to be receptive of the fluid flow and configured to generate mechanical energy from energy of the fluid flow.

During normal operation, the combustor can be fired at normal temperatures at which damage to components of the turbine due to heat generated by the combustor is limited. However, during transient events, such as abnormal grid load events, it is often necessary to fire the combustor at higher-than-normal temperatures in which case thermal damage to the turbine is increasingly likely to occur.

### BRIEF DESCRIPTION OF THE INVENTION

According to one aspect of the invention, a system for operating a power plant is provided and includes a grid configured to generate a normal load and an abnormal load, a turbomachine configured to provide power to the grid in accordance with the normal load by firing at normal temperatures and in accordance with the abnormal load by firing at higher-than-normal temperatures, a cooling system disposed to cool components of the turbomachine with fluid supplied by an external reservoir and a controller configured to identify when the grid generates the abnormal load and to responsively operate the cooling system.

According to another aspect of the invention, a turbomachine is provided and includes a compressor to compress inlet gas to produce compressed gas, a combustor receptive of the compressed gas from the compressor and configured to combust the compressed gas along with fuel to produce a fluid flow, a turbine receptive of the fluid flow from the combustor and configured to generate mechanical energy from energy of the fluid flow and a cooling system including an extraction circuit to extract fluid from the compressor, a thermal unit by which the extracted fluid is thermally communicated with a fluid supplied by an external reservoir to form coolant and an injection circuit to inject the coolant into the turbine.

According to yet another aspect of the invention, a method for operating a power plant is provided and includes firing a turbomachine at normal temperatures and at higher-than-normal temperatures in accordance with a normal grid load and an abnormal grid load, respectively, identifying an incidence of the abnormal grid load and continuing to fire the turbomachine at the higher-than normal temperatures while cooling components of the turbomachine with fluid supplied by an external reservoir.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a turbomachine; and
FIG. 2 is a schematic illustration of a power plant including the turbomachine of FIG. 1.

The detailed description explains embodiments of the invention, together with advantages and features, by way of example with reference to the drawings.

### DETAILED DESCRIPTION OF THE INVENTION

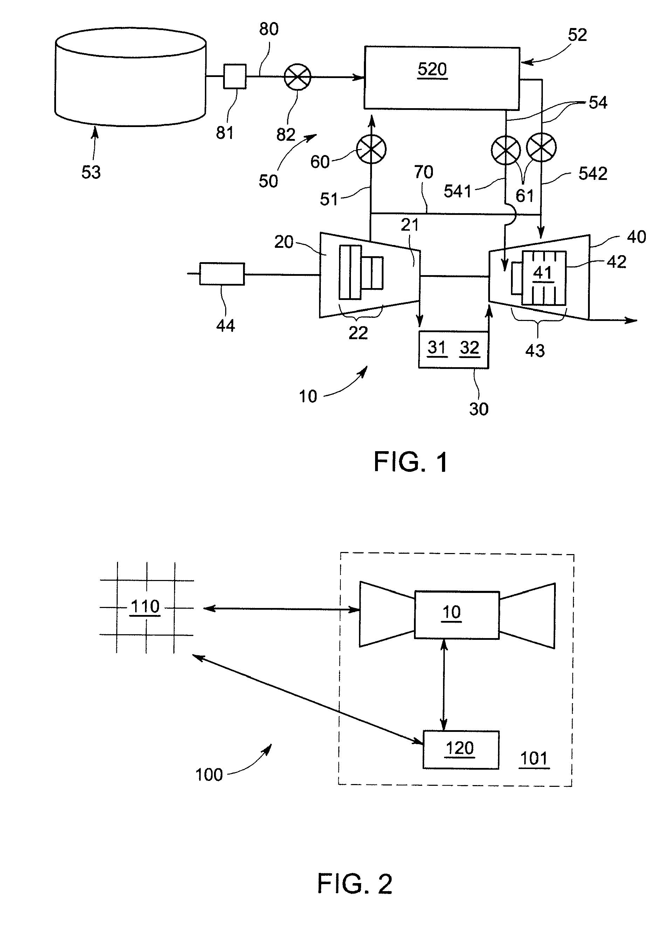

With reference to FIG. 1, a turbomachine 10 is provided. The turbomachine 10 may have various configurations and structures and, in an exemplary embodiment, includes a compressor 20, a combustor 30, a turbine 40 and a cooling system 50. The compressor 20 compresses inlet gas to produce compressed gas and includes an outlet 21 through which a relatively large portion of the compressed gas may be output and a plurality of axially arranged stages 22 disposed upstream from the outlet 21. The axially arranged stages 22 generally include compressor wheels that rotate about a central rotor to accomplish the gas compression. The combustor 30 is fluidly coupled to the outlet 21 and thereby receptive of the relatively large portion of the compressed gas from the compressor 20. The combustor 30 is formed to define a first interior 31 in which the compressed gas is mixed with fuel to form a mixture and a second interior 32 in which the mixture is combusted. This combustion produces a fluid flow of, for example, high temperature fluids.

The turbine 40 is fluidly coupled to an outlet of the combustor 30 and is thereby receptive of the fluid flow from the combustor 30. The turbine 40 is formed to define a pathway 41 for the fluid flow and includes components 42 disposed proximate to the pathway 41 and the fluid flow such that, when the fluid flow includes the high temperature fluids, the components 42 may be heated significantly. The components 42 are generally arranged in a plurality of axially arranged stages 43 such that the turbine 40 as a while is configured to generate mechanical energy from energy of the fluid flow. This mechanical energy is transmitted to a generator 44, which is coupled to the turbine 40 via a rotatable shaft, The generator 44 converts the mechanical energy to electricity to be provided to a grid 110 (see FIG. 2) in response to a load generated by the grid 110.

The cooling system 50 is provided to cool at least the components 42 of the turbine 40 during certain operational conditions. The cooling system 50 includes an extraction circuit 51, which is fluidly coupled to the compressor 20 and configured to extract fluid from the compressor 20, a thermal unit 52 by which the extracted fluid is thermally communicated with a fluid supplied by an external reservoir 53 to form coolant and an injection circuit 54. The injection circuit 54 is fluidly coupled to the turbine 40 and configured to inject the coolant into the turbine 40 such that the components 42 can be cooled during at least the certain operational conditions.

In accordance with embodiments, the extraction circuit 51 may extract the extracted fluid from the compressor 20 at or near one or more of the plurality of the axially arranged stages 22. In particular, the extraction may occur at one or more of the central axially arranged stages 22. Similarly, the injection circuit 54 may be configured to inject the coolant toward one or more of the components 42 at or near one or more of the axially arranged stages 43. In particular, the injection may occur downstream from the most forward one of the axially arranged stage 43 (i.e., downstream from the stage 1 nozzle). In accordance with further embodiments, the injection circuit 54 may include first and second conduits 541 and 542. In some embodiments, the first conduit 541 is disposed to inject the coolant at or near an upstream one of the axially arranged stages 43 and the second conduit 542 is disposed to inject the coolant at or near a downstream one of the axially arranged stages 43. In accordance with further alternate embodiments, the first conduit 541 may be disposed to supply coolant to rotating components while the second conduit 542 may be disposed to supply coolant to stationary components.

The extraction circuit 51 may include a valve 60 to moderate a flow of the extracted fluid toward the thermal unit 52 and the injection circuit 54 may include a valve 61, which may be disposed along one or both of the first and second conduits 541 and 542, to moderate a flow of the coolant toward the turbine 40. In addition, the turbomachine 10 may include a bypass circuit 70, which is fluidly coupled to the extraction circuit 51 upstream from the valve 60 and to the injection circuit 54 downstream from the valve 61. The bypass circuit 70 may therefore provide coolant from the compressor 20 to the turbine 40 while bypassing the thermal unit 52.

The external reservoir 53 may be a tank or a pressurized tank that is sufficiently large to supply fluid to one or more turbomachines 10 to which it may be connected. A size of the external reservoir will, therefore, be dictated by the number of turbomachines 10 to which the external reservoir 53 is connected. The fluid supplied by the external reservoir 53 may include any stable fluid such as one or more of an inert gas and/or a noble gas or, more particularly, liquid air or liquid nitrogen.

The thermal unit 52 is fluidly coupled to an outlet of the extraction circuit 51 and an inlet of the injection circuit 54 and may include a mixing chamber 520. Within the mixing chamber 520, the extracted fluid and the fluid supplied by the external reservoir 53 are mixable to form the coolant as having a temperature between the temperature of the extracted fluid and the temperature of the fluid supplied by the external reservoir 53. In accordance with alternate embodiments, the thermal unit 52 may include a heat exchanger, such as a shell and tube heat exchanger or a plate fin heat exchanger, in which the extracted fluid and the fluid supplied by the external reservoir do not mix.

The external reservoir 53 and the thermal unit 52 are coupled to one another by way of a supply line 80. In accordance with embodiments, a pressurizing element 81, such as a pump, and/or a valve 82 may be operably disposed along the supply line 80. The pressurizing element 81 may be configured to pressurize the fluid supplied by the external reservoir 53 to nearly the pressure of the extracted fluid and the valve 82 may be configured to moderate an amount of the fluid supplied by the external reservoir 53 that is permitted to reach the thermal unit 52.

With reference to FIGS. 1 and 2, a system 100 for operating a power plant 101 is provided. The system 100 includes a grid 110, which is configured to generate a normal load and an abnormal load. The power plant 101 includes the turbomachine 10 substantially as described above and a controller 120. The turbomachine 10 is configured to provide power to the grid 110 in accordance with the normal load by firing the combustor 30 at normal temperatures and in accordance with the abnormal load by firing the combustor 30 at higher-than-normal temperatures. The controller 120 is operably coupled to the grid 110 and the turbomachine 10 and is configured to identify when the grid 110 generates the abnormal load. The controller 120 is further configured to responsively operate the cooling system 50 to cool at least the components 42 of the turbine 40. In this way, the turbomachine 10 can be over-fired and operated at the higher-than-normal temperatures with a decrease risk of damage being done to the turbine 40. In accordance with embodiments, the controller 120 may selectively operate the cooling system 50 during one or more of full load, full speed turbomachine 10 operations, part load turbomachine 10 operations, turndown turbomachine 10 operations and/or transient events.

In accordance with aspects, a method for operating the power plant 101 is provided. The method includes firing the turbomachine 10 at normal temperatures and at higher-than-normal temperatures in accordance with a normal grid 110 load and an abnormal grid 110 load, respectively, and identifying an incidence of the abnormal grid 110 load. The method further includes and continuing to fire the turbomachine 10 at the higher-than normal temperatures while cooling at least the components 42 of the turbine 40 of the turbomachine 10 with fluid supplied by the external reservoir 53. As above, the cooling may be selectively conducted during one or more of full load, full speed turbomachine 10 operations, part load turbomachine 10 operations, turndown turbomachine 10 operations and/or transient events

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system for operating a power plant, comprising:
a grid (110) configured to generate a normal load and an abnormal load;
a turbomachine (10) configured to provide power to the grid in accordance with the normal load by firing at normal temperatures and in accordance with the abnormal load by firing at higher-than-normal temperatures;
a cooling system (50) disposed to cool components of the turbomachine with fluid supplied by an external reservoir (53); and
a controller (120) configured to identify when the grid generates the abnormal load and to responsively operate the cooling system.

2. A turbomachine, comprising:
a compressor (20) to compress inlet gas to produce compressed gas;
a combustor (30) receptive of the compressed gas from the compressor and configured to combust the compressed gas along with fuel to produce a fluid flow;
a turbine (40) receptive of the fluid flow from the combustor and configured to generate mechanical energy from energy of the fluid flow; and
a cooling system (50) including an extraction circuit (51) to extract fluid from the compressor (20), a thermal unit (52) by which the extracted fluid is thermally communicated with a fluid supplied by an external reservoir (53) to form coolant and an injection circuit (54) to inject the coolant into the turbine (40).

3. The turbomachine according to claim 2, wherein the compressor (20) comprises:
an outlet (21) to which the combustor (30) is fluidly coupled; and
a plurality of axially arranged stages (43) upstream from the outlet,
the extraction circuit (51) being configured to extract the extracted fluid from one or more of the plurality of the axially arranged stages.

4. The turbomachine according to claim 2 or claim 3, wherein the turbine (40) is formed to define a pathway (41) for the fluid flow and comprises components (42) proximate to the pathway,
the injection circuit (54) being configured to inject the coolant toward one or more of the components (42).

5. The turbomachine according to any one of claims 2 to 4, wherein the turbine (40) comprises a plurality of axially arranged stages (43),
the injection circuit (54) being configured to inject the coolant into the turbine proximate to one or more of the axially arranged stages.

6. The turbomachine according to any one of claims 2 to 5, further comprising a bypass circuit coupled (70) to the extraction circuit (51) and the injection circuit (54) to bypass the thermal unit (52).

7. The turbomachine according to any preceding claim, wherein the fluid supplied by the external reservoir comprises one or more of an inert and a noble gas.

8. The turbomachine according to any preceding claim, wherein the fluid supplied by the external reservoir comprises one or more of liquified nitrogen, air and a combination of noble or inert gases.

9. The turbomachine according to any preceding claim, wherein the thermal unit comprises a mixing chamber in which the extracted fluid and the fluid supplied by the external reservoir are mixable.

10. The turbomachine according to any preceding claim, wherein the thermal unit comprises a pressurizing element to pressurize the fluid supplied by the external reservoir.

11. The turbomachine according to any one of claims 2 to 10, wherein the coolant comprises at least one of the extracted fluid and a quantity of the fluid supplied by the external reservoir.

12. The turbomachine according to any preceding claim, wherein the cooling system is selectively operable during one or more of full load, full speed operations, part load operations, turndown operations and transient events.

13. A method for operating a power plant, comprising:
firing a turbomachine (10) at normal temperatures and at higher-than-normal temperatures in accordance with a normal grid load and an abnormal grid load, respectively;
identifying an incidence of the abnormal grid load; and
continuing to fire the turbomachine at the higher-than normal temperatures while cooling components of the turbomachine with fluid supplied by an external reservoir.

14. The method according to claim 13, wherein the cooling is selectively conducted during one or more of full load, full speed turbomachine operations, part load turbomachine operations, turndown turbomachine operations and transient events.
